# EUROPEAN PATENT SPECIFICATION

(11) **EP 2 966 563 B1**
(45) Date of publication and mention of the grant of the patent: **20.11.2019**
(21) Application number: 15175247.4
(22) Date of filing: 03.07.2015
(51) Int. Cl.: G06F 3/12, H04L 29/12, H04N 1/00

(54) **CONTACT INFORMATION TRANSFER SYSTEM, CONTACT INFORMATION TRANSFER METHOD, PORTABLE TERMINAL APPARATUS, AND CONTACT INFORMATION TRANSFER PROGRAM**
KONTAKTINFORMATIONÜBERTRAGUNGSSYSTEM, KONTAKTINFORMATIONÜBERTRAGUNGSVERFAHREN, TRAGBARE ENDGERÄTEVORRICHTUNG UND KONTAKTINFORMATIONSÜBERTRAGUNGSPROGRAMM
SYSTÈME ET PROCÉDÉ DE TRANSFERT D'INFORMATIONS DE CONTACT, APPAREIL TERMINAL PORTABLE ET PROGRAMME DE TRANSFERT D'INFORMATIONS DE CONTACT

(30) Priority: 11.07.2014 JP 2014143711
(43) Date of publication of application: 13.01.2016
(73) Proprietor: KONICA MINOLTA, INC., Tokyo 100-7015 (JP)
(72) Inventor: Ichiyama, Shohei, Tokyo 100-7015 (JP); Sugimoto, Hiroaki, Tokyo 100-7015 (JP); Kurumasa, Yoichi, Tokyo 100-7015 (JP); Shinosaki, Yusuke, Tokyo 100-7015 (JP); Kawabata, Mie, Tokyo 100-7015 (JP)
(74) Representative: Hoffmann Eitle

(56) References cited:
- EP-A1- 2 683 180
- US-A1- 2009 122 339
- US-A1- 2014 157 372

## Description

### BACKGROUND OF THE INVENTION

### Field of the Invention

The present invention relates to an image processing apparatus such as a multifunctional digital image forming apparatus (i.e., a multi-function peripheral abbreviated as MFP) having printer function, facsimile function, scanner function, and other functions, a contact information transfer system having a portable terminal apparatus such as a smartphone or a tablet computer terminal, a contact information transfer method to be implemented by the contact information transfer system, the portable terminal apparatus, and a contact information transfer program.

### Description of the Related Art

In recent years, there are network systems having an image processing apparatus as mentioned above and portable terminal apparatuses having applications being installed for accessing this image processing apparatus and these network systems allow users to manipulate the image processing apparatus from their portable terminal apparatuses and to instruct the image processing apparatus to perform processing on data stored on their portable terminal apparatuses.

With such a network system, users may need to transfer contact information to the image processing apparatus from their portable terminal apparatuses. In order to achieve this, there are conventional and well-known techniques; these are a series of developing an exclusive application, installing this application on portable terminal apparatuses, enabling access between the portable terminal apparatuses and the image processing apparatus, and allowing the users to select contact information and transfer the contact information to the image processing apparatus by manipulating their portable terminal apparatuses with a gesture or other activation.

For example, as introduced by Japanese Unexamined Patent Publication No. 2009-177626, it is a system that allows users to transfer address information and attached information (information attached to emails or facsimiles) to an image processing apparatus by manipulating their portable terminal apparatuses having applications for controlling the image processing apparatus.

Unfortunately, with conventional techniques as described above, users are bothered by selecting contact information and giving transfer instructions on an exclusive application that is developed for transferring contact information to the image processing apparatus.

Specifically, users are bothered by making a selection and giving transfer instructions on their portable terminal apparatuses then operating the image processing apparatus to check contact information displayed on its operation panel, meanwhile they have to keep switching their views on between their portable terminal apparatuses and the image processing apparatus back and forth. That is not simple manipulation and not a user-friendly system.

More specifically, users are bothered by doing the following manipulation about every selection they make: selecting a desirable contact target; giving instructions to transfer contact information to the image processing apparatus; and checking its operation panel to confirm the safe receipt of the contact information.

The present invention has been made in consideration of the above-described technical background. It is an object of the present invention to provide a contact information transfer system and method that allow users to transfer contact information to an image processing apparatus from their portable terminal apparatuses with simple manipulation; it is another object of the present invention to provide a portable terminal apparatus and a contact information transfer program that serve the same.

EP 2 683 180 A1 relates to a communication device. The communication device may communicate a first establishing command with an external device via a near-field communication interface so as to establish a first communication link to receive target data from the external device via the interface. In an example, address information included in an address book can be sent after the user of the portable device/external device activates a MFP application and inputs to the portable device an instruction for sending the information to the communication device.

US 2009/0122339 A1 relates to a communication device capable of organizing duplicated address book records. The communication device includes a storing section, a determining section and a storage controlling section, wherein a plurality of communication contact data is stored. Further, a CPU of the device may receive address book records transferred from a mobile telephone via a transfer interface unit and store the records in a storage area, wherein the CPU may convert the address book records received from the mobile telephone to the address book record format used on the device.

### SUMMARY OF THE INVENTION

The above-described problem can be solved by the independent claims.

For example, a contact information transfer system comprises an image processing apparatus and a portable terminal apparatus, the image processing apparatus and the portable terminal apparatus being capable of accessing each other, the portable terminal apparatus including:
a cooperation means that launches a second application for organizing contact information upon access to the image processing apparatus being enabled by a first application for accessing the image processing apparatus, the contact information including a plurality of contact identification information for identifying the contact and points of contact, the points of contact being connected to the respective contact identification information;
a contact information obtaining means that obtains the contact information as instructed by the first application, after the launch of the second application; and
a transfer means that transfers the contact information to the image processing apparatus as instructed by the first application, the contact information being obtained by the contact information obtaining means,
the image processing apparatus comprising:
   a receiving means that receives the contact information from the portable terminal apparatus;
   a display means; and
   a display control means that displays the contact information on the display means by converting the contact information into a data format supported on the display means , the contact information being received by the receiving means.

The portable terminal apparatus further includes a display means that displays the contact information and a judgment means that judges whether a list of the contact identification information or a point of contact connected to a specified one of the contact identification information is displayed on the display means of the portable terminal apparatus;
the portable terminal apparatus obtains all the contact identification information in the list and transfers them to the image processing apparatus if the judgment means judges that the list of the contact identification information is displayed on the display means of the portable terminal apparatus or the portable terminal apparatus obtains a point of contact connected to a specified one of the contact identification information and transfers it to the image processing apparatus if the judgment means judges that the point of contact is displayed on the display means of the portable terminal apparatus; and
the image processing apparatus displays all the contact identification information or the point of contact on the display means of the image processing apparatus, the contact identification information or the point of contact being obtained therefrom.

The image processing apparatus further includes:
a selection means that specifies a contact identification information, the contact identification name being selected by a user among all the contact identification information displayed on the display means of the image processing apparatus; and
a request means that requests the portable terminal apparatus to provide a point of contact connected to the contact identification name, the contact identification name being specified by the selection means;
the portable terminal apparatus obtains the point of contact and transfers it to the image processing apparatus as requested by the request means; and
the image processing apparatus displays the point of contact on the display means of the image processing apparatus, the point of contact being received from the portable terminal apparatus.

The image processing apparatus further comprises a storage means that stores all the contact identification information and the point of contact both being received from the portable terminal apparatus; and
the display control means of the image processing apparatus makes the display means of the image processing apparatus switch its screen between all the contact identification information and the point of contact by retrieving all the contact identification information and the point of contact from the storage means.

For example, a contact information transfer method to be implemented by a contact information transfer system comprising an image processing apparatus and a portable terminal apparatus, the image processing apparatus and the portable terminal apparatus being capable of accessing each other, the contact information transfer method including the steps of the portable terminal apparatus:
launching a second application for organizing contact information upon access to the image processing apparatus being enabled by a first application for accessing the image processing apparatus, the contact information including a plurality of contact identification information for identifying the contact and points of contact, the points of contact being connected to the respective contact identification information;
obtaining the contact information as instructed by the first application, after the launch of the second application; and transferring the contact information to the image processing apparatus as instructed by the first application, the contact information being obtained also as instructed by the first application,
the contact information transfer method further including the steps of the image processing apparatus:
   receiving the contact information from the portable terminal apparatus; and
   displaying the contact information on the display means by converting the contact information into a data format supported on the display means, the contact information being received from the portable terminal apparatus.

For example, a portable terminal apparatus includes:
a cooperation means that launches a second application for organizing contact information upon access to the image processing apparatus being enabled by a first application for accessing the image processing apparatus, the contact information including a plurality of contact identification information for identifying the contact and points of contact, the points of contact being connected to the respective contact identification information;
a contact information obtaining means that obtains the contact information as instructed by the first application, after the launch of the second application; and
a transfer means that transfers the contact information to the image processing apparatus as instructed by the first application, the contact information being obtained by the contact information obtaining means.

The portable terminal apparatus further includes:
a display means that displays the contact information; and a judgment means that judges whether a list of the contact identification information or a point of contact connected to a specified one of the contact identification information is displayed on the display means,
wherein the contact information obtaining means obtains all the contact identification information in the list if the judgment means judges that the list of the contact identification information is displayed on the display means or the contact information obtaining means obtains a point of contact connected to a specified one of the contact identification information if the judgment means judges that the point of contact is displayed on the display means.

The portable terminal apparatus further includes a receiving means that receives a request for a point of contact connected to a specified one of the contact identification information, the request being given by the image processing apparatus after the contact information obtaining means obtains all the contact identification information and the transfer means transfers all the contact identification information to the image processing apparatus, wherein, in response to the request being received by the receiving means, the contact information obtaining means obtains the point of contact from the second application and the transfer means transfers the obtained point of contact to the image processing apparatus.

For example, a contact information transfer program for a computer of a portable terminal apparatus executes: launching a second application for organizing contact information upon access to an image processing apparatus being enabled by a first application for accessing the image processing apparatus, the contact information including a plurality of contact identification information for identifying the contact and points of contact, the points of contact being connected to the respective contact identification information;
obtaining the contact information as instructed by the first application, after the launch of the second application; and transferring the contact information to the image processing apparatus as instructed by the first application, the contact information being obtained also as instructed by the first application.

The portable terminal apparatus further includes a display means that displays the contact information, and the contact information transfer program executes:
judging whether a list of the contact identification information or a point of contact connected to a specified one of the contact identification information is displayed on the display means; and
obtaining all the contact identification information in the list if it is judged that the list of the contact identification information is displayed on the display means or obtaining a point of contact connected to a specified one of the contact identification information if it is judged that the point of contact is displayed on the display means.

The contact information transfer program further executes:
receiving a request for a point of contact connected to a specified one of the contact identification information, the request being given by the image processing apparatus after all the contact identification information are obtained and transferred to the image processing apparatus; and
obtaining the point of contact from the second application and transferring the obtained point of contact to the image processing apparatus, in response to the request being received.

### EFFECTS OF THE INVENTION

According to the invention described in the aforementioned item [1], when a user enables access between his/her portable terminal apparatus and the image processing apparatus by manipulating a first application, a second application for organizing contact information including a plurality of contact identification information and points of contact connected to the respective contact identification information is launched. The portable terminal apparatus obtains the contact information and transfers it to image processing apparatus as instructed by the first application. Receiving the contact information from the portable terminal apparatus, the image processing apparatus displays the contact information on the display means by converting it into a data format supported on the display means.

In other words, upon access being enabled between the portable terminal apparatus and the image processing apparatus by the user, contact information is automatically transferred to the image processing apparatus from the portable terminal apparatus and displayed on the display means. This means, the user can transfer contact information to the image processing apparatus from the portable terminal apparatus without being bothered by selecting a desirable contact information and giving transfer instructions on the portable terminal apparatus. Furthermore, the user does not have to keep switching his/her view on between the portable terminal apparatus and the image processing apparatus back and forth, achieving simple manipulation and a user-friendly system.

According to the invention described in the aforementioned item [2], the portable terminal apparatus obtains all the contact identification information in the list or a point of contact connected to a specified one of the contact identification information, depending on which is displayed on the display means of the portable terminal apparatus, and transfers them to the image processing apparatus. Thus, the contact identification information or a point of contact connected to a specified one of the contact identification information is automatically displayed on the display means of the image processing apparatus.

According to the invention described in the aforementioned item [3], upon a contact identification information being selected by the user from those displayed on the display means of the image processing apparatus, a point of contact connected to the selected contact identification information is automatically displayed on the display means of the image processing apparatus. This makes the system more user-friendly.

According to the invention described in the aforementioned item [4], the image processing apparatus stores all the contact identification information and the point of contact, both received from the portable terminal apparatus, on the storage means in order to switch its screen between the contact identification information and the point of contact by retrieving the contact identification information and the point of contact from the storage means. Thus, after storing all the contact identification information and the point of contact, the image processing apparatus does not have to obtain them from the portable terminal 1 again.

According to the invention described in the aforementioned item [5], upon access being enabled between the portable terminal apparatus and the image processing apparatus by a user, contact information is automatically transferred to the image processing apparatus from the portable terminal apparatus and displayed on the display means. This means, the user can transfer contact information to the image processing apparatus from the portable terminal apparatus without being bothered by selecting a desirable contact identification information and giving transfer instructions on the portable terminal apparatus. Furthermore, the user does not have to keep switching his/her view on between the portable terminal apparatus and the image processing apparatus back and forth, achieving simple manipulation and a user-friendly method.

According to the invention described in the aforementioned item [6], a user can transfer contact information to the image processing apparatus from the portable terminal apparatus without being bothered by selecting a desirable contact identification information and giving transfer instructions on the portable terminal apparatus. Furthermore, the user does not have to keep switching his/her view on between the portable terminal apparatus and the image processing apparatus back and forth, achieving simple manipulation and a user-friendly portable terminal apparatus.

According to the invention described in the aforementioned item [7], the portable terminal apparatus obtains all the contact identification information in the list or a point of contact connected to a specified one of the contact identification information, depending on which is displayed on the display means, and transfers the obtained information to the image processing apparatus.

According to the invention described in the aforementioned item [8], when the user selects a contact identification information from all the contact identification information displayed on the image processing apparatus, the portable terminal apparatus obtains a point of contact connected to the selected contact identification information and transfers it to the image processing apparatus.

According to the invention described in the aforementioned item [9], upon access is enabled between the portable terminal apparatus and the image processing apparatus by a user, contact information stored on the portable terminal apparatus is automatically transferred to the image processing apparatus by a computer of the portable terminal apparatus.

According to the invention described in the aforementioned item [10], all the contact identification information in the list or a point of contact connected to a specified one of the contact identification information, depending on which is displayed on the display means, are automatically obtained and transferred to the image processing apparatus, by a computer of the portable terminal apparatus.

According to the invention described in the aforementioned item [11], upon a contact identification information being selected by the user from the list of the contact identification information displayed on the image processing apparatus, a point of contact connected to the selected contact identification information is obtained and transferred to the image processing apparatus by a computer of the portable terminal apparatus.

### BRIEF DESCRIPTION OF THE DRAWINGS

FIG. 1 illustrates a configuration of a contact information transfer system according to one embodiment of the present invention.
FIG. 2 is a block diagram illustrating a configuration of a portable terminal apparatus.
FIG. 3 is a block diagram illustrating a configuration of main parts of an image processing apparatus.
FIG. 4 is a block diagram illustrating functional configurations of a controller of the portable terminal apparatus and a main body system controller of the image processing apparatus.
FIG. 5A is a schematic view of a home screen to be displayed on the portable terminal apparatus; FIG. 5B illustrates a screen to which the screen switches when a user starts up an address book application; FIG. 5C illustrates a screen to which the screen switches when a MFP-terminal access application is launched.
FIG. 6A illustrates that a user is selecting a desirable contact name from those displayed in a list form on the portable terminal apparatus; FIG. 6B illustrates a screen having detailed contact information of the selected contact name.
FIG. 7A illustrates that a user is starting up the address book application while the MFP-terminal access application is open; FIG. 7B illustrates a screen having all contact names to be displayed in a list when the address book application is launched; FIG. 7C illustrates a screen to be displayed when the user selects a desirable contact name from the list.
FIGs. 8A to 8F illustrate a contact information transfer process to be performed by the portable terminal apparatus and the image processing apparatus when intent is enabled.
FIG. 9 illustrates a procedure of how the MFP-terminal access application launches the address book application to obtain contact information.
FIG. 10 illustrates a detailed procedure of how the MFP-terminal access application obtains contact information.
FIG. 11 illustrates another procedure of how the MFP-terminal access application obtains contact information.
FIG. 12 is a flowchart representing an operation procedure of the portable terminal apparatus.
FIG. 13 is a flowchart representing an operation procedure of the image processing apparatus.
FIG. 14 is a flowchart representing an operation procedure to be executed by the image processing apparatus and the portable terminal apparatus when a user selects a contact name from those displayed in a list form on a display of the image processing apparatus.

### DETAILED DESCRIPTION OF THE PREFERRED EMBODIMENTS

Hereinafter, some embodiments of the present invention will be described with reference to the accompanying drawings.

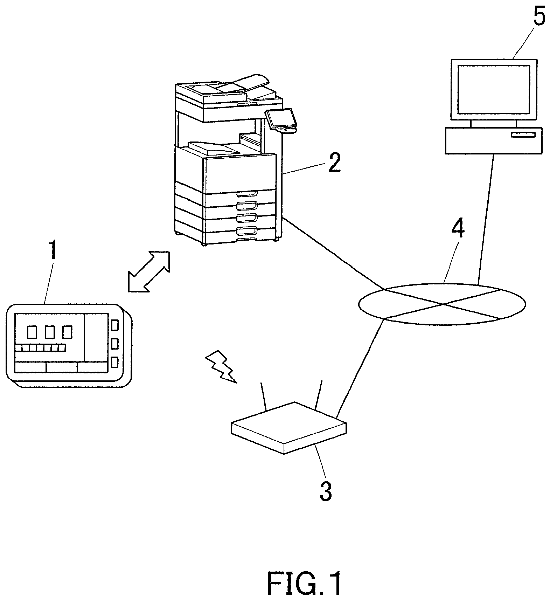

FIG. 1 illustrates a configuration of a contact information transfer system according to one embodiment of the present invention.

The contact information transfer system is provided with a portable terminal apparatus 1 such as a smartphone or a tablet computer terminal and an image processing apparatus 2; the portable terminal apparatus 1 and the image processing apparatus 2 are mutually connected via a wireless LAN router 3 and a network 4 such that they are capable of accessing each other. Alternatively, the portable terminal apparatus 1 and the image processing apparatus 2 may be mutually connected through short distance wireless communication. A personal computer 5 is connected to the network 4.

In this embodiment, a MFP, having various functions such as copier function, printer function, scanner function, and facsimile function as described above, is employed as the image processing apparatus 2. Hereinafter, the image processing apparatus will also be referred to as "MFP". The portable terminal apparatus will also be referred to as "portable terminal" or more simply, "terminal".

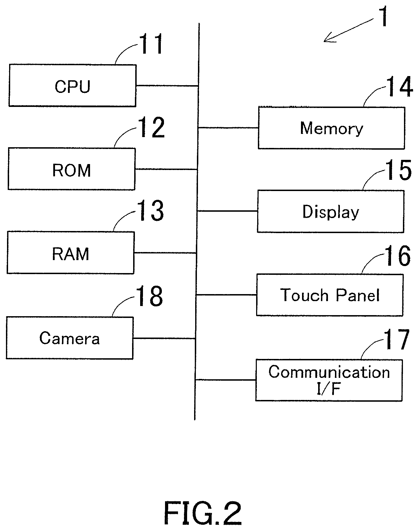

FIG. 2 is a block diagram illustrating a configuration of the portable terminal 1.

The portable terminal 1 is provided with a CPU 11, a ROM 12, a RAM 13, a memory 14, a display 15, a touch panel 16, a communication interface (communication IF) 17, a camera 18, and other portions.

The CPU 11 controls the portable terminal 1 in a unified and systematic manner as instructed by an operating system (abbreviated as OS), an application for accessing the MFP 2 (also referred to as "app", simply), an address book app that functions as an address book for organizing contact information registered by a user, and other various apps. The control operations will be later described in details.

The ROM 12 is a memory that stores operation programs for the CPU 11 and other data; the RAM 13 is a memory that provides a work area for the CPU 11 to execute the operation programs.

The memory 14 is a memory that stores the OS, the apps, contact information, and other data.

The display 15 displays operation screens, messages, and other output for user manipulation, as well as various images such as web pages and pictures taken by a camera; the display 15 is comprised of a liquid-crystal display device, for example. The touch panel 16, being provided on the surface of the display 15, detects a user's touches including gestures and identifies the coordinates at which the user touches.

The communication interface 17 supports telephone calls over a telephone circuit and supports wireless data communications with the MFP 2 and other external apparatuses through an access point. The camera 18 serves to take pictures of various objects.

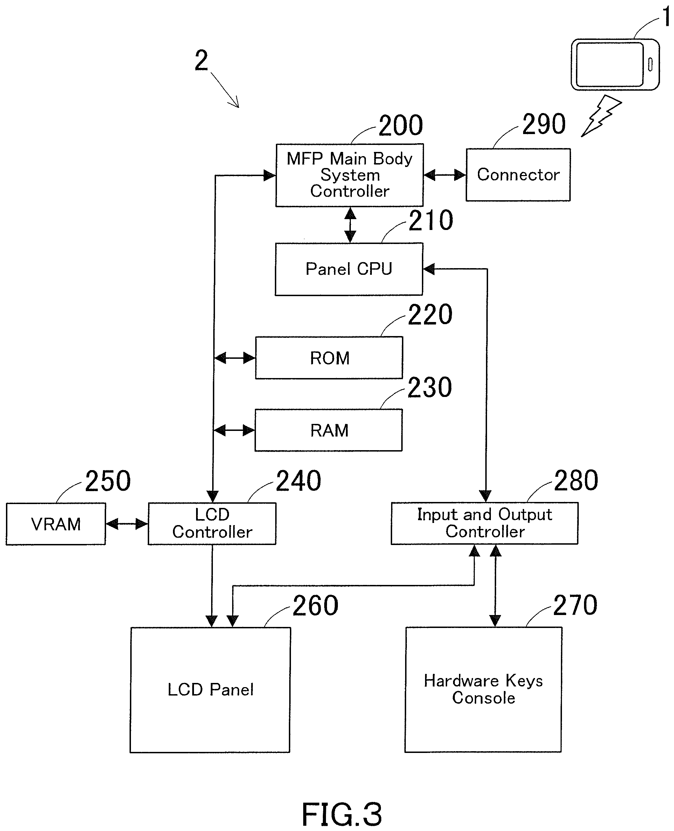

FIG. 3 is a block diagram illustrating a configuration of main parts of the MFP 2. As illustrated in FIG. 3, the MFP 2 is provided with a MFP main body system controller 200, a panel CPU 210, a ROM 220, a RAM 230, a LCD controller 240, a VRAM 250, a LCD panel 260, a hardware keys console 270, an input and output controller 280, and a connector 290.

The MFP main body system controller 200 controls the MFP 2 in a unified and systematic manner; the MFP main body system controller 200 implements various functions such as copier function, printer function, facsimile function, and scanner function as instructed by a user.

The panel CPU 210 controls the manipulation system in a unified manner, while communicating with the MFP main body system controller 200. The ROM 220 stores operation programs for the panel CPU 210, image data including screen data of screens to be displayed on the LCD panel 260, and other data. The RAM 230 provides a work area for the panel CPU 210 to perform processing as instructed by the operation programs stored on the ROM 220.

The LCD controller 240 controls the read and write operations of the VRAM 250 and the display operation of the LCD panel 260. Specifically, the LDC controller 240 obtains images from the ROM 220 to write in the VRAM 250 as instructed by the panel CPU 210 then retrieve them from the VRAM 250 to display on the LCD panel 260.

The LCD panel 260 is comprised of a liquid-crystal display (LCD) device having touch panel functionality and displays various screens, messages, and other information.

The hardware keys console 270 is comprised of the following portions: a hardware keyboard having a start key a numeric keypad, a panel reset key, and other keys; a LED indicating the status of the MFP 2; a beeper that emits beep tones confirming that the hardware keyboard or the LCD panel 260 accepts input and output manipulations; and other portions.

The input and output controller 280 detects a user physically touching on the LCD panel 260, judges the touch position, transfers to the panel CPU 210 a notification of a function option selected from those displayed on the screen, and controls the input and output operations in accordance with the function and other settings. Furthermore, by controlling the hardware keys console 270, the input and output controller 280 communicates with the MFP main body system controller 200 through the intermediation of the panel CPU 210 as the need arises.

It should be noted that, upon the pressing on a start key of the hardware keys console 270, this notification is transferred to the input and output controller 280 and also transferred to the MFP main body system controller 200 through the intermediation of the panel CPU 210; in this way, the MFP 2 is allowed to start a series of copier operations.

The connector 290 is an interface for connecting to the portable terminal 1. This allows the MFP 2 to perform interactive data communications with the portable terminal 1 by accessing the portable terminal 1.

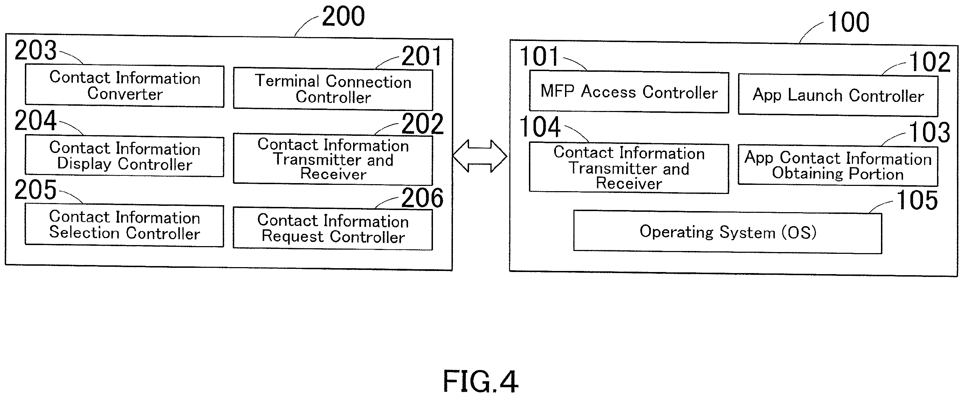

FIG. 4 is a block diagram illustrating functional configurations of the controller of the portable terminal 1 and the main body system controller 200 of the MFP 2.

The portable terminal 1 is provided with the following functional portions: a MFP access controller 101, an app launch controller 102, an app contact information obtaining portion 103, and a contact information transmitter and receiver 104. The functions of these portions are implemented by the CPU 11 of the portable terminal 1 as instructed by a MFP-terminal access app for accessing the MFP 2 (will be also referred to as "access app", simply) and an OS 105 installed on the portable terminal 1.

The MFP access controller 101 enables access between the portable terminal 1 and the MFP 2 by specifying an IP address of the MFP 2. The app launch controller 102 launches a general-purpose app when access is enabled between the portable terminal 1 and the MFP 2. Here, it should be noted that there is a cooperation function called "intent" which enables access to a function of an app by launching this app from another app. In this embodiment, intent enables accessing a function of an address book app for organizing contact information, by launching this address book app from another app.

The app contact information obtaining portion 103 obtains contact information organized by the address book app, while the address book app is open. In this way, the address book app is launched by intent and finally obtains contact information organized by the address book app itself. Here, it should be noted that contact information includes contact names as contact IDs and it also includes points of contact connected to a specified contact name, for example: telephone number, facsimile number, and email address.

The contact information transmitter and receiver 104 transfers to the MFP 2 the contact information obtained from the address book app.

The connection between the portable terminals 1 and the MFP 2, intent, obtaining contact information, and transferring the contact information to the MFP 2 are performed with an application program interface (API) supplied by the OS 105.

The MFP main body system controller 200 is provided with the following functional portions: a terminal connection controller 201, a contact information transmitter and receiver 202, a contact information converter 203, a contact information display controller 204, a contact name selection controller 205, and a contact information request controller 206.

The terminal connection controller 201 allows the MFP 2 to connect to the portable terminal 1 by controlling the connector 290; the contact information transmitter and receiver 202 receives contact information from the portable terminal 1 and transfers a request for points of contact, which is generated by the contact information request controller 206, to the portable terminal 1.

After the contact information transmitter and receiver 202 receives the contact information, the contact information converter 203 converts the contact information into a raster image format or a font format so that the contact information can be displayed on the LCD panel 260. The contact information display controller 204 controls operations such that the contact information converted by the contact information converter 203 will be displayed on the LCD panel 260. In this embodiment, the contact information includes a plurality of contact names as contact identification information for identifying the contact and points of contact connected to the respective contact name.

While a list of contact names is displayed on the LCD panel 260, the contact name selection controller 205 specifies a contact name selected by a user from the list and records on a memory the selected contact name and points of contact connected to that contact name.

After the contact name selection controller 205 specifies the contact name selected by the user, the contact information request controller 206 transfers to the portable terminal 1 a request for points of contact connected to that contact name, through the intermediation of the contact information transmitter and receiver 202. Here, upon the receipt of a request for points of contact connected to the contact name "Mr. A", for example, the portable terminal 1 transfers to the MFP 2 the points of contact, for example telephone number, facsimile number, and email address, connected to the contact name "Mr. A" and registered on the portable terminal 1 itself.

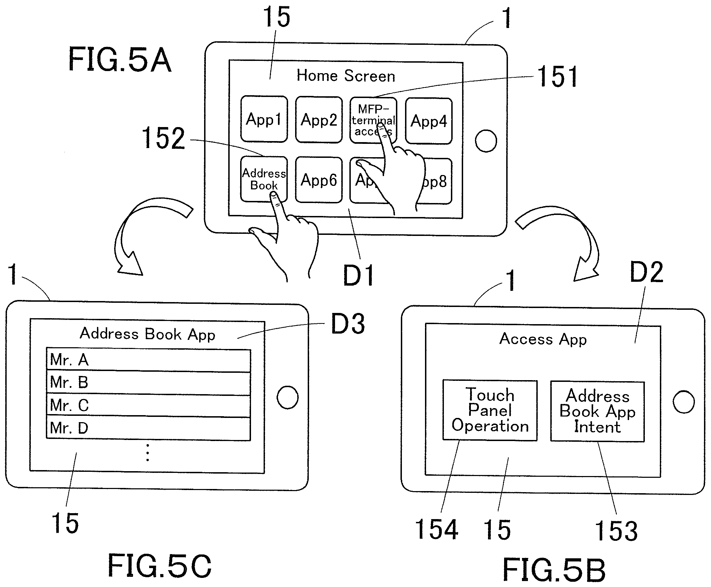

FIG. 5A illustrates a schematic view of a home screen D1 to be displayed on the display 15 of the portable terminal 1. Since the portable terminal 1 has an access app, a general-purpose address book app, and other apps being installed thereon, app icons 151 and 152 shown on the home screen D1 represent the access app and the address book app, respectively.

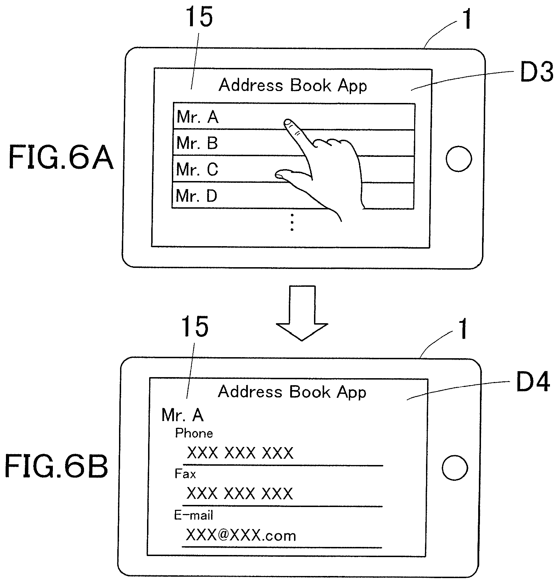

For example, when the user starts up the address book app on the home screen D1 by touching the app icon 152 representing the address book app, the screen switches to a screen D3 as illustrated in FIG. 5C on which a list of contact names is displayed on the basis of the contact information stored on the portable terminal 1. As illustrated in FIG. 6A, when the user selects a desirable contact name from the list on the screen D3, the screen switches to a screen D4 as illustrated in FIG. 6B on which points of contact connected to that contact name (telephone number, facsimile number, and email address, for example) are displayed. In this way the user can check this information on the portable terminal 1.

For another example, when the user starts up the address book app on the home screen D1 of FIG. 5A, by touching the app icon 151 representing the access app, access is enabled between the portable terminal 1 and the MFP 2 and the screen on the display 15 switches to a screen D2 as illustrated in FIG. 5B, which indicates that the access is now enabled. On the screen D2, there are a touch panel operation button 154 for manipulating the MFP 2 and an address book app intent button 153 for launching the address book app by intent.

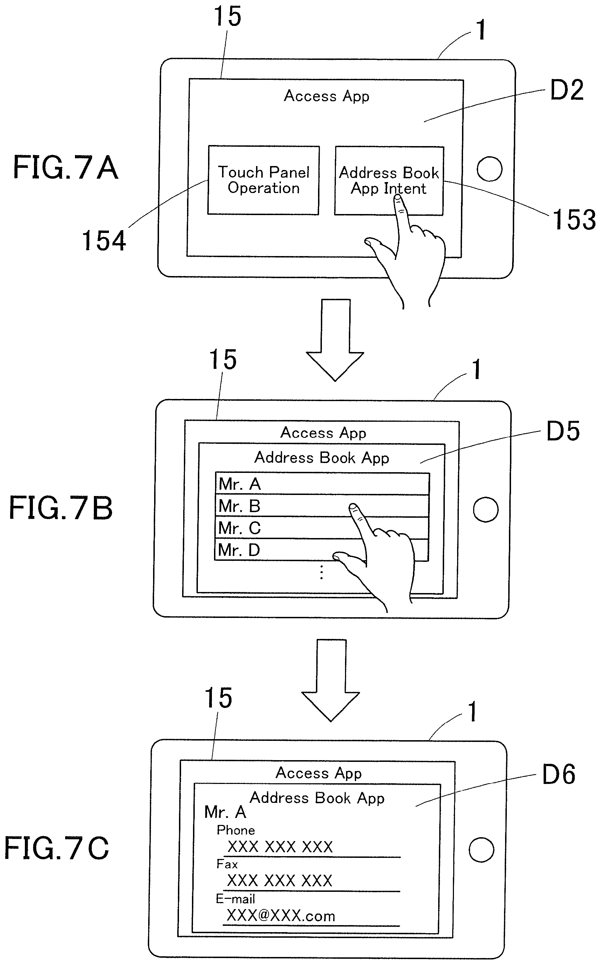

As illustrated in FIG. 7A, the user is allowed to start up the address book app from the access app on the screen D2 by touching the address book app intent button 153 (intent is enabled in this way). Specifically, when the user starts up the address book app from the access app, the screen switches to a screen D5 as illustrated in FIG. 7B on which a list of contact names is displayed, being similar to those on the screen D3 of FIG. 6. When the user further selects a desirable contact name from the list on the screen D5, the screen switches to a screen D6 as illustrated in FIG. 7C on which points of contact connected to that contact name are displayed.

Furthermore, the contact names and the points of contact displayed on the display 15 are automatically obtained and transferred to the MFP 2 by the access app.

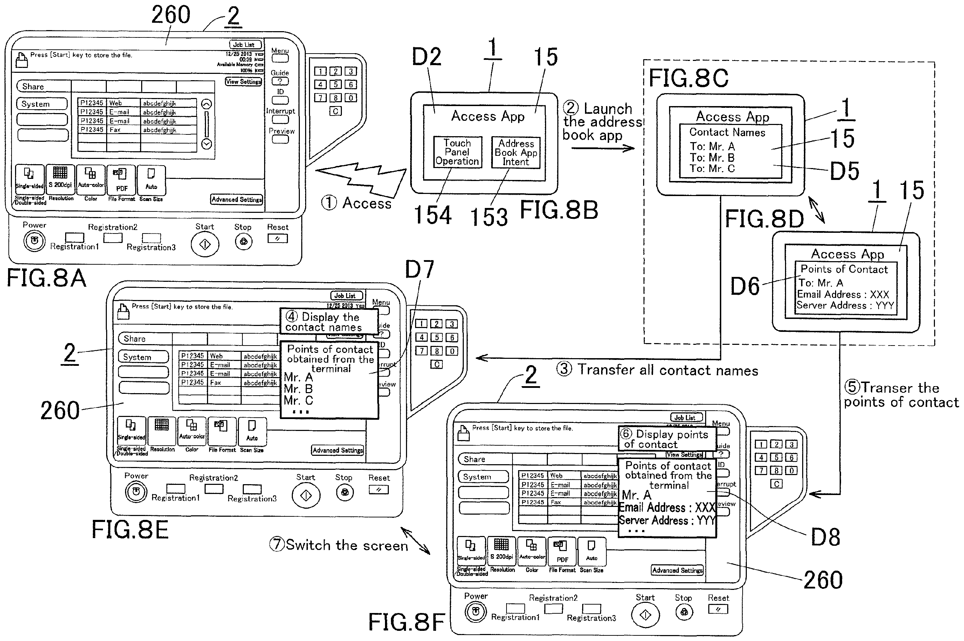

FIGs. 8A to 8F illustrate a contact information transfer process to be performed by the portable terminal 1 and the MFP 2 when intent is enabled.

When the user starts up the access app on the portable terminal 1, access is enabled between the portable terminal 1 and the MFP 2 (circled number 1 in FIG. 8) and the screen displayed on the display 15 of the portable terminal 1 is switched to the screen D2 of FIG. 8B on which the address book app intent button 153 and the touch panel operation button 154 are displayed. Meanwhile, FIG. 8A illustrates the screen displayed on the LCD panel 260 of the MFP 2, which does not switch even after the access is enabled between the portable terminal 1 and the MFP 2.

When the user starts up the address book app from the access app by touching the address book app intent button 153 on the screen D2 of the portable terminal 1 (circled number 2 in FIG. 8), the screen switches to the screen D5 of FIG. 8C on which a list of contact names is displayed. When the user further selects a desirable contact name from the list on the screen D5, the screen switches to the screen D6 of FIG. 8D on which points of contact connected to that contact name are displayed.

Furthermore, the access app of the portable terminal 1 obtains the contact information displayed on the display 15, from the address book app by intent. For example, the access app obtains all the contact names while these are displayed in a list form as illustrated in FIG. 8C. The access app then transfers all the contact names to the MFP 2 (circled number 3 in FIG. 8).

Upon the receipt of all the contact names, the MFP 2 converts them into a data format supported on the LCD panel 260 and displays a pop-up screen D7 listing all the contact names, on the screen presently displayed on the LCD panel 260, as illustrated in FIG. 8E (circled number 4 in FIG. 8).

For another example, the access app obtains points of contact connected to the contact name while these are displayed on the display 15 as illustrated in FIG. 8D. The access app then transfers these points of contact to the MFP 2 (circled number 5 in FIG. 8).

Upon the receipt of the points of contact, the MFP 2 converts them into a data format supported on the LCD panel 260 and displays a pop-up screen D8 showing the points of contact, on the screen presently displayed on the LCD panel 260, as illustrated in FIG. 8F (circled number 6 in FIG. 8).

As described above, in this embodiment, upon access being enabled between the portable terminal 1 and the MFP 2 by the user, contact information is automatically transferred to the MFP 2 from the portable terminal 1 and displayed on the LCD panel 260. Specifically, since the MFP 2 is allowed to display all contact names on the LCD panel 260 while the portable terminal 1 displays the same on the display 15 and to display points of contact on the LCD panel 260 while the portable terminal 1 displays the same on the display 15, contact information, i.e., all contact names and points of contact connected to a specified one of the contact names, is automatically transferred to the MFP 2 from the portable terminal 1 and displayed on the LCD panel 260, without the user being bothered by selecting a desirable contact name and giving transfer instructions on the portable terminal 1. Furthermore, the user does not have to keep switching his/her view on between the portable terminal 1 and the MFP 2 back and forth, achieving simple manipulation and a user-friendly system.

Furthermore, upon a contact name being selected by the user from those displayed on the LCD panel 260 of the MFP 2, a request for points of contact connected to the selected contact name is transferred to the portable terminal 1 from the MFP 2. In response to the request, points of contact connected to that contact name are obtained from the address book app then transferred to the MFP 2 as instructed by the access app of the portable terminal 1. Subsequently, the points of contact received therefrom are displayed on the LCD panel 260 of the MFP 2. This makes the system more user-friendly.

In this configuration, the MFP 2 also stores all the contact names, received from the portable terminal 1 and used for display, on a temporary memory area of the memory. The user may wish to return to the screen listing all the contact names from the screen showing the points of contact connected to the selected contact name, on the LCD panel 260. In such a case, this configuration allows the MFP 2 to switch its screen to the screen listing all the contact names from the screen showing the points of contact, by retrieving all the contact names from the memory area. In other words, this configuration allows the MFP 2 to switch to the screen listing all the contact names quickly, without the need of obtaining all the contact names from the portable terminal 1 again.

In this configuration, the MFP 2 may also store the points of contact, received from the portable terminal 1, on the temporary memory area of the memory in order to switch to the screen showing the points of contact from the screen listing all the contact names, by retrieving the points of contact from the memory area.

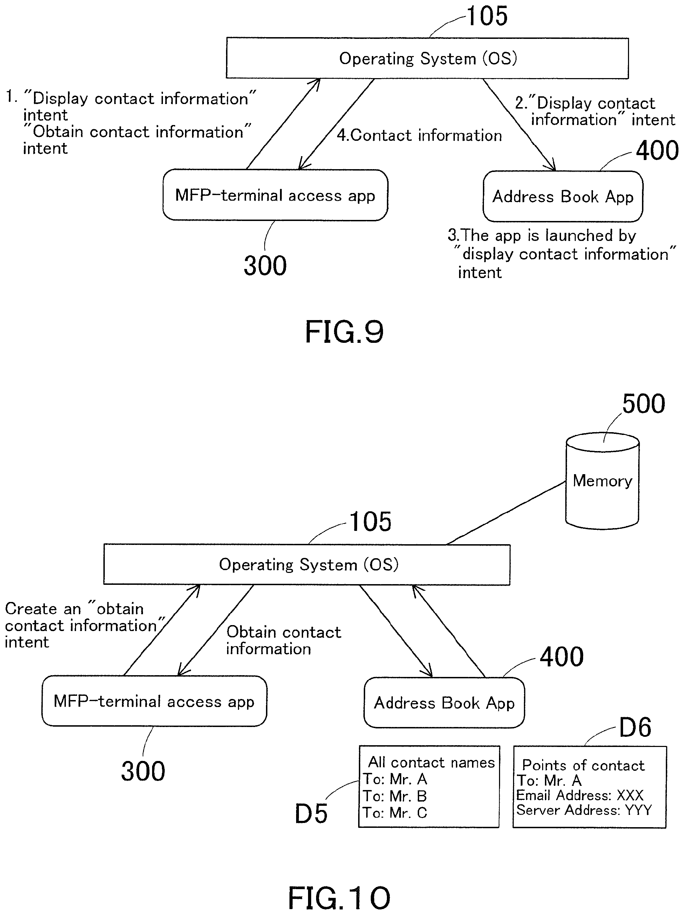

FIG. 9 illustrates a procedure of how the access app launches the address book app to obtain contact information.

To start with, the user starts up an access app 300 to display the screen D2. When the user touches the address book app intent button 153 on the screen D2, the access app 300 creates a "display contact information" intent and an "obtain contact information" intent to give them to the OS 105.

Receiving the "display contact information" intent, the OS 105 transfers it to an address book app 400 (if there is more than one address book app 400, the user can select a desirable one) that is capable of displaying contact information on the display 15.

The intent received from the OS 105 launches the address book app 400; the address book app 400 then obtains contact information organized by the address book app 400 itself, from the OS 105, and displays it on the display 15. Receiving the "obtain contact information" intent, the OS 105 obtains contact information from the memory area to give it to the access app 300.

FIG. 10 illustrates a detailed procedure of how the access app 300 obtains contact information from the OS 105.

The access app 300 creates an "obtain contact information" intent for obtaining contact information from the OS 105. The address book app 400 obtains contact information from the OS 105 to display either the screen D5 listing all contact names or the screen D6 showing points of contact connected to a specified one of the contact names, on the display 15.

Receiving the "obtain contact information" intent, the OS 105 obtains contact information identical with that presently displayed by the address book app 400, from a memory 500 that is controlled by the OS 105 itself. The OS 105 then transfers the contact information to the access app 300 that is the creator of the "obtain contact information" intent. In this way, the access app 300 finally obtains the contact information from the OS 105. As described above, the access app 300 obtains contact information that is identical with that presently used by the address book app 400, by requesting the OS 105.

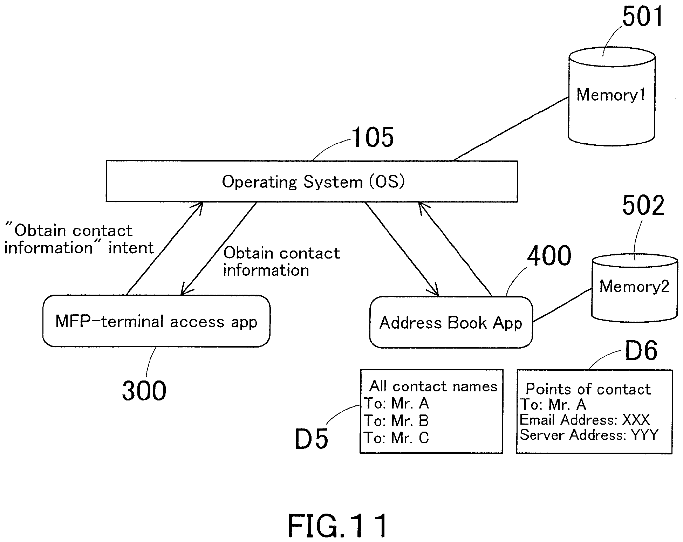

FIG. 11 illustrates another procedure of how the access app 300 obtains contact information. In this example, there are a first memory 501 controlled by the OS 105 and a second memory 502 that is a dedicated local memory controlled by the address book app 400. Contact information is stored on the second memory 502.

To start with, the access app 300 creates an "obtain contact information" intent for obtaining contact information from the OS 105. The address book app 400 obtains contact information from the second memory 502 to display either the screen D5 listing all contact names or the screen D6 showing points of contact connected to a specified one of the contact names, on the display 15.

Receiving the "obtain contact information" intent, the OS 105 obtains contact information identical with that presently displayed by the address book app 400, from the second memory 502 that is locally controlled by the address book app 400. The OS 105 then transfers the contact information to the access app 300. In this way, the access app 300 finally obtains the contact information from the OS 105.

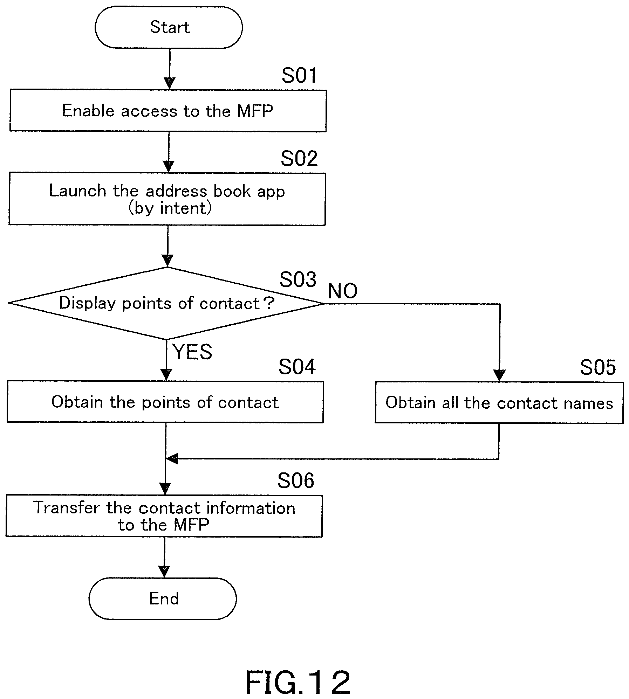

FIG. 12 is a flowchart representing an operation procedure of the portable terminal 1. The operation procedure is executed by the CPU 11 of the portable terminal 1 as instructed by the access app 300 and the OS 105.

The user starts up the access app 300; access to the MFP 2 is then enabled in Step S01. The address book app 400 is launched by intent in Step S02.

In Step S03, it is judged whether or not points of contact connected to a specified contact name is displayed on the display 15. If points of contact connected to a specified contact name is displayed thereon (YES in Step S03), these points of contact are obtained in Step S04. The routine then proceeds to Step S06. If points of contact connected to a specified contact name is not displayed thereon, i.e., if all contact names are displayed in a list form thereon (NO in Step S03), all the contact names are obtained in Step S05. The routine then proceeds to Step S06.

In Step S06, the contact information obtained, the points of contact or all the contact names, is transferred to the MFP 2 in packets.

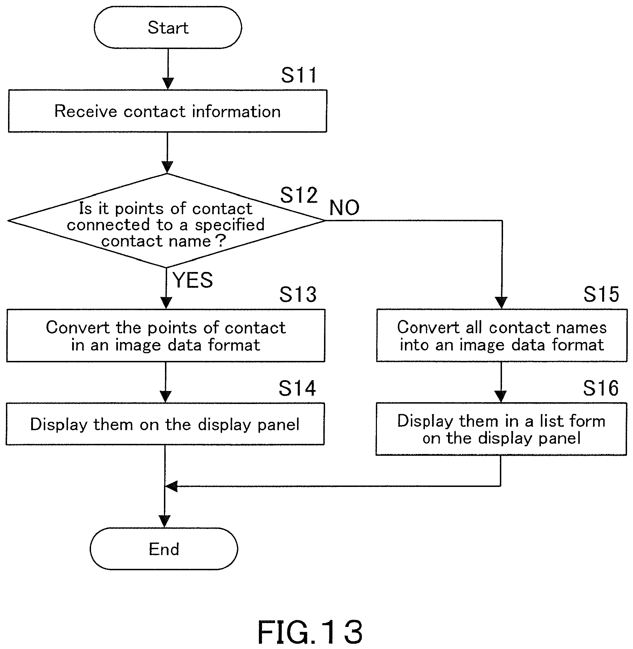

FIG. 13 is a flowchart representing an operation procedure of the MFP 2.

In Step S11, contact information is received from the portable terminal 1. In Step S12, it is judged whether or not the contact information received is points of contact connected to a specified contact name. If it is points of contact connected to a specified contact name (YES in Step S12), the points of contact are converted into a data format supported on the LCD panel 260 in Step S13. After the conversion, in Step S14, the points of contact are displayed on the LCD panel 260.

Back to Step S12, if the contact information received is not points of contact connected to a specified contact name, i.e., if it is all contact names (NO in Step S12), all the contact names are converted into a data format supported on the LCD panel 260 in Step S15. After the conversion, in Step S16, all the contact names are displayed in a list form on the LCD panel 260.

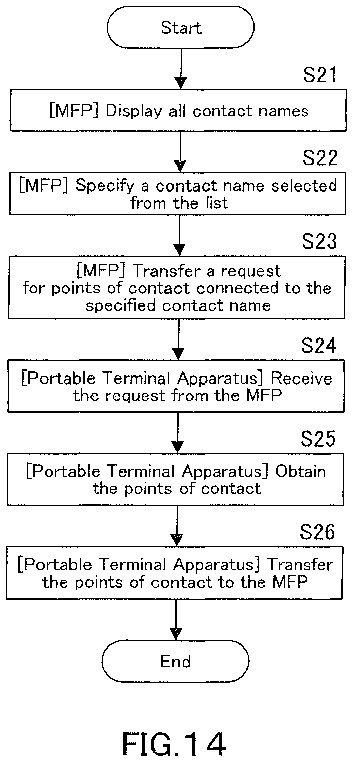

FIG. 14 is a flowchart representing an operation procedure to be executed by the MFP 2 and the portable terminal 1 when a user selects a contact name from those displayed in a list form on the LCD panel 260 of the MFP 2. In the flowchart of FIG. 14, the MFP 2 is in charge of the steps with the name "MFP" and the portable terminal 1 is in charge of the steps with the name "portable terminal".

In Step S21, the MFP 2 displays all contact names on the LCD panel 260. The user selects a contact name from the list and the MFP 2 specifies this contact name in Step S22. In Step S23, the MFP 2 transfers to the portable terminal 1 a request for points of contact connected to that contact name.

The portable terminal 1 receives a request for the points of contact from the MFP 2 in Step S24 and obtains the points of contact in Step S25. Subsequently, in Step S26, the portable terminal 1 transfers the obtained points of contact to the MFP 2. The MFP 2 displays the points of contact received therefrom, on the LCD panel 260.

## Claims

1. A contact information transfer system comprising an image processing apparatus (2) and a portable terminal apparatus (1), the image processing apparatus (2) and the portable terminal apparatus (1) being capable of accessing each other, the portable terminal apparatus (1) comprising:
a cooperation means (102) configured to launch a second application for organizing contact information, stored on the portable terminal apparatus (1), upon access to the image processing apparatus (2) being enabled by a first application for accessing the image processing apparatus (2), wherein the second application is launched from the first application, the contact information including a plurality of contact identification information for identifying a contact and points of contact, the points of contact being connected to the respective contact identification information;
a contact information obtaining means (103) configured to automatically obtain the contact information, organized by the second application, as instructed by the first application, after the launch of the second application; and
a transfer means (104) configured to transfer the contact information to the image processing apparatus (2) as instructed by the first application, the contact information being obtained by the contact information obtaining means (103), the image processing apparatus (2) comprising:
a receiving means (202) configured to receive the contact information from the portable terminal apparatus (1);
a display means (260); and
a display control means (204) configured to display the contact information on the display means (260) by converting the contact information into a data format supported on the display means (260), the contact information being received by the receiving means (202).

2. The contact information transfer system as recited in Claim 1, wherein:
the portable terminal apparatus (1) further comprises a display means (15) that is configured to display the contact information and a judgment means (11) that judges whether a list of the contact identification information or a point of contact connected to a specified one of the contact identification information is displayed on the display means (15) of the portable terminal apparatus (1);
the portable terminal apparatus (1) is configured to obtain all the contact identification information in the list and transfers them to the image processing apparatus (2) if the judgment means (11) judges that the list of the contact identification information is displayed on the display means (15) of the portable terminal apparatus (1) or the portable terminal apparatus (1) is configured to obtain a point of contact connected to a specified one of the contact identification information and to transfer it to the image processing apparatus (2) if the judgment means (11) judges that the point of contact is displayed on the display means (15) of the portable terminal apparatus (1); and
the image processing apparatus (2) is configured to display all the contact identification information or the point of contact on the display means (260) of the image processing apparatus (2), the contact identification information or the point of contact being obtained therefrom.

3. The contact information transfer system as recited in Claim 2, wherein:
the image processing apparatus (2) further comprises:
a selection means (205) that is configured to specify a contact identification information, the contact identification name being selected by a user among all the contact identification information displayed on the display means (260) of the image processing apparatus (2); and
a request means (206) that is configured to request the portable terminal apparatus (1) to provide a point of contact connected to the contact identification name, the contact identification name being specified by the selection means (205) ;
the portable terminal apparatus (1) is configured to obtain the point of contact and transfers it to the image processing apparatus (2) as requested by the request means (206); and
the image processing apparatus (2) is configured to display the point of contact on the display means (260) of the image processing apparatus (2), the point of contact being received from the portable terminal apparatus (1).

4. The contact information transfer system as recited in Claim 3, wherein:
the image processing apparatus (2) further comprises a storage means that is configured to store all the contact identification information and the point of contact both being received from the portable terminal apparatus (1); and
the display control means (204) of the image processing apparatus (2) configured to make the display means (260) of the image processing apparatus (2) switch its screen between all the contact identification information and the point of contact by retrieving all the contact identification information and the point of contact from the storage means.

5. A contact information transfer method to be implemented by a contact information transfer system comprising an image processing apparatus (2) and a portable terminal apparatus (1), the image processing apparatus (2) and the portable terminal apparatus (1) being capable of accessing each other, the contact information transfer method comprising the steps of the portable terminal apparatus (1):
launching from a first application a second application for organizing contact information, stored on the portable terminal apparatus, upon access to the image processing apparatus (2) being enabled by the first application for accessing the image processing apparatus (2), the contact information including a plurality of contact identification information for identifying a contact and points of contact, the points of contact being connected to the respective contact identification information;
automatically obtaining the contact information, organized by the second application, as instructed by the first application, after the launch of the second application; and
automatically transferring the contact information to the image processing apparatus (2) as instructed by the first application, the contact information being obtained also as instructed by the first application, the contact information transfer method further comprising the steps of the image processing apparatus (2):
receiving the contact information from the portable terminal apparatus (1); and displaying the contact information on the display means (260) by converting the contact information into a data format supported on the display means (260), the contact information being received from the portable terminal apparatus (1).

6. A portable terminal apparatus (1) comprising:
a cooperation means (102) configured to launch a second application for organizing contact information, stored on the portable terminal apparatus (1), upon access to the image processing apparatus (2) being enabled by a first application for accessing the image processing apparatus (2), wherein the second application is launched from the first application, the contact information including a plurality of contact identification information for identifying a contact and points of contact, the points of contact being connected to the respective contact identification information;
a contact information obtaining means (103) configured to automatically obtain the contact information, organized by the second application, as instructed by the first application, after the launch of the second application; and
a transfer means (104) configured to automatically transfer the contact information to the image processing apparatus (2) as instructed by the first application, the contact information being obtained by the contact information obtaining means (103) .

7. The portable terminal apparatus (1) as recited in Claim 6, further comprising:
a display means (15) that is configured to display the contact information; and
a judgment means (11) that is configured to judge whether a list of the contact identification information or a point of contact connected to a specified one of the contact identification information is displayed on the display means (15), wherein the contact information obtaining means (103) is configured to obtain all the contact identification information in the list if the judgment means (11) judges that the list of the contact identification information is displayed on the display means (15) or the contact information obtaining means (103) is configured to obtain a point of contact connected to a specified one of the contact identification information if the judgment means (11) judges that the point of contact is displayed on the display means (15).

8. The portable terminal apparatus (1) as recited in Claim 7, further comprising a receiving means (104) that receives a request for a point of contact connected to a specified one of the contact identification information, the request being given by the image processing apparatus (2) after the contact information obtaining means (103) obtains all the contact identification information and the transfer means (104) transfers all the contact identification information to the image processing apparatus (2), wherein, in response to the request being received by the receiving means (104), the contact information obtaining means (103) obtains the point of contact from the second application and the transfer means (104) transfers the obtained point of contact to the image processing apparatus (2).

9. A contact information transfer program for a computer (11) of a portable terminal apparatus (1) to execute:
launching from a first application a second application for organizing contact information, stored on the portable terminal apparatus (1), upon access to an image processing apparatus (2) being enabled by the first application for accessing the image processing apparatus (2), the contact information including a plurality of contact identification information for identifying a contact and points of contact, the points of contact being connected to the respective contact identification information;
automatically obtaining the contact information, organized by the second application, as instructed by the first application, after the launch of the second application; and
automatically transferring the contact information to the image processing apparatus (2) as instructed by the first application, the contact information being obtained also as instructed by the first application.

10. The contact information transfer program for the computer (11) of the portable terminal apparatus (1) as recited in Claim 9, the portable terminal apparatus (1) further comprising a display means (15) that displays the contact information, the contact information transfer program to execute:
judging whether a list of the contact identification information or a point of contact connected to a specified one of the contact identification information is displayed on the display means (15); and
obtaining all the contact identification information in the list if it is judged that the list of the contact identification information is displayed on the display means (15) or obtaining a point of contact connected to a specified one of the contact identification information if it is judged that the point of contact is displayed on the display means (15) .

11. The contact information transfer program for the computer (11) of the portable terminal apparatus (1) as recited in Claim 10, the contact information transfer program to further execute:
receiving a request for a point of contact connected to a specified one of the contact identification information, the request being given by the image processing apparatus (2) after all the contact identification information are obtained and transferred to the image processing apparatus (2); and
obtaining the point of contact from the second application and transferring the obtained point of contact to the image processing apparatus (2), in response to the request being received.

## Patentansprüche

1. Kontaktinformationsübertragungssystem, umfassend eine Bildverarbeitungseinrichtung (2) und eine tragbare Endgeräteeinrichtung (1), wobei die Bildverarbeitungseinrichtung (2) und die tragbare Endgeräteeinrichtung (1) auf einander zugreifen können, die tragbare Endgeräteeinrichtung (1) umfassend:
ein Kooperationsmittel (102), das konfiguriert ist, eine zweite Anwendung zum Organisieren von auf der tragbaren Endgeräteeinrichtung (1) gespeicherten Kontaktinformationen zu starten, wenn der Zugriff auf die Bildverarbeitungseinrichtung (2) von einer ersten Anwendung zum Zugreifen auf die Bildverarbeitungseinrichtung (2) ermöglicht wird, wobei die zweite Anwendung von der ersten Anwendung gestartet wird, wobei die Kontaktinformationen eine Vielzahl von Kontaktidentifikationsinformationen zum Identifizieren eines Kontakts und von Kontaktpunkten aufweisen, wobei die Kontaktpunkte mit den jeweiligen Kontaktidentifikationsinformationen verbunden sind;
ein Kontaktinformationserhaltungsmittel (103), das konfiguriert ist, die von der zweiten Anwendung organisierten Kontaktinformationen, wie von der ersten Anwendung angewiesen, nach dem Start der zweiten Anwendung automatisch zu erhalten; und
ein Übertragungsmittel (104), das konfiguriert ist, die Kontaktinformationen zu der Bildverarbeitungseinrichtung (2), wie von der ersten Anwendung angewiesen, zu übertragen, wobei die Kontaktinformationen von dem Kontaktinformationserhaltungsmittel (103) erhalten werden,
die Bildverarbeitungseinrichtung (2) umfassend:
ein Empfangsmittel (202), das konfiguriert ist, die Kontaktinformationen von der tragbaren Endgeräteeinrichtung (1) zu empfangen;
ein Anzeigemittel (260); und
ein Anzeigesteuermittel (204), das konfiguriert ist, die Kontaktinformationen auf dem Anzeigemittel (260) anzuzeigen, indem die Kontaktinformationen in ein auf dem Anzeigemittel (260) unterstütztes Datenformat umgewandelt werden, wobei die Kontaktinformationen von dem Empfangsmittel (202) empfangen werden.

2. Kontaktinformationsübertragungssystem nach Anspruch 1, wobei:
die tragbare Endgeräteeinrichtung (1) weiter ein Anzeigemittel (15), das konfiguriert ist, die Kontaktinformationen anzuzeigen, und
ein Beurteilungsmittel (11) umfasst, das beurteilt, ob eine Liste der Kontaktidentifikationsinformationen oder ein Kontaktpunkt, der mit einer bestimmten der Kontaktidentifikationsinformationen verbunden ist, auf dem Anzeigemittel (15) der tragbaren Endgeräteeinrichtung (1) angezeigt wird;
die tragbare Endgeräteeinrichtung (1) konfiguriert ist, alle Kontaktidentifikationsinformationen in der Liste zu erhalten und sie an die Bildverarbeitungseinrichtung (2) zu übertragen, wenn das Beurteilungsmittel (11) beurteilt, dass die Liste der Kontaktidentifikationsinformationen auf dem Anzeigemittel (15) der tragbaren Endgeräteeinrichtung (1) angezeigt werden, oder die tragbare Endgeräteeinrichtung (1) konfiguriert ist, einen mit einer bestimmten der Kontaktidentifikationsinformationen verbundenen Kontaktpunkt zu erhalten und an die Bildverarbeitungseinrichtung (2) zu übertragen, wenn das Beurteilungsmittel (11) beurteilt, dass der Kontaktpunkt auf dem Anzeigemittel (15) der tragbaren Endgeräteeinrichtung (1) angezeigt wird; und
die Bildverarbeitungseinrichtung (2) konfiguriert ist, alle Kontaktidentifikationsinformationen oder den Kontaktpunkt auf dem Anzeigemittel (260) der Bildverarbeitungseinrichtung (2) anzuzeigen, wobei die Kontaktidentifikationsinformationen oder der Kontaktpunkt daraus erhalten werden.

3. Kontaktinformationsübertragungssystem nach Anspruch 2, wobei:
die Bildverarbeitungseinrichtung (2) weiter umfasst:
ein Auswahlmittel (205), das konfiguriert ist, Kontaktidentifikationsinformationen anzugeben, wobei der Kontaktidentifikationsname von einem Benutzer aus allen Kontaktidentifikationsinformationen ausgewählt wird, die auf dem Anzeigemittel (260) der Bildverarbeitungseinrichtung (2) angezeigt werden; und
ein Anfragemittel (206), das konfiguriert ist, die tragbare Endgeräteeinrichtung (1) aufzufordern, einen Kontaktpunkt bereitzustellen, der mit dem Kontaktidentifikationsnamen verbunden ist, wobei der Kontaktidentifikationsname von dem Auswahlmittel (205) angegeben wird;
die tragbare Endgeräteeinrichtung (1) konfiguriert ist, den Kontaktpunkt zu erhalten und ihn an die Bildverarbeitungseinrichtung (2) zu übertragen, wie von dem Anfragemittel (206) angefordert; und
die Bildverarbeitungseinrichtung (2) konfiguriert ist, den Kontaktpunkt auf dem Anzeigemittel (260) der Bildverarbeitungseinrichtung (2) anzuzeigen, wobei der Kontaktpunkt von der tragbaren Endgeräteeinrichtung (1) empfangen wird.

4. Kontaktinformationsübertragungssystem nach Anspruch 3, wobei:
die Bildverarbeitungseinrichtung (2) weiter ein Speichermittel umfasst, das konfiguriert ist, alle Kontaktidentifikationsinformationen und den Kontaktpunkt zu speichern, die beide von der tragbaren Endgeräteeinrichtung (1) empfangen werden; und
das Anzeigesteuermittel (204) der Bildverarbeitungseinrichtung (2) konfiguriert ist, zu veranlassen, dass das Anzeigemittel (260) der Bildverarbeitungseinrichtung (2) ihren Bildschirm zwischen allen Kontaktidentifikationsinformationen und dem Kontaktpunkt umschaltet, indem alle Kontaktidentifikationsinformationen und den Kontaktpunkt von dem Speichermittel abgerufen werden.

5. Kontaktinformationsübertragungsverfahren, das von einem Kontaktinformationsübertragungssystem implementiert werden soll, umfassend eine Bildverarbeitungseinrichtung (2) und eine tragbare Endgeräteeinrichtung (1), wobei die Bildverarbeitungseinrichtung (2) und die tragbare Endgeräteeinrichtung (1) auf einander zugreifen können, wobei das Kontaktinformationsübertragungsverfahren die folgenden Schritte der tragbaren Endgeräteeinrichtung (1) umfasst:
Starten, von einer ersten Anwendung, einer zweiten Anwendung zum Organisieren von auf der tragbaren Endgeräteeinrichtung gespeicherten Kontaktinformationen, wenn der Zugriff auf die Bildverarbeitungseinrichtung (2) von der ersten Anwendung zum Zugreifen auf die Bildverarbeitungseinrichtung (2) ermöglicht wird, wobei die Kontaktinformationen eine Vielzahl von Kontaktidentifikationsinformationen zum Identifizieren eines Kontakts und von Kontaktpunkten aufweisen, wobei die Kontaktpunkte mit den jeweiligen Kontaktidentifikationsinformationen verbunden sind;
Automatisches Erhalten der von der zweiten Anwendung organisierten Kontaktinformationen, wie von der ersten Anwendung angewiesen, nach dem Start der zweiten Anwendung; und
automatisches Übertragen der Kontaktinformationen an die Bildverarbeitungseinrichtung (2), wie von der ersten Anwendung angewiesen, wobei die Kontaktinformationen auch wie von der ersten Anwendung angewiesen erhalten werden, wobei das Kontaktinformationsübertragungsverfahren weiter die folgenden Schritte der Bildverarbeitungseinrichtung (2) umfasst:
Empfangen der Kontaktinformationen von der tragbaren Endgeräteeinrichtung (1); und Anzeigen Kontaktinformationen auf dem Anzeigemittel (260), indem die Kontaktinformationen in ein auf dem Anzeigemittel (260) unterstütztes Datenformat umgewandelt werden, wobei die Kontaktinformationen von der tragbaren Endgeräteeinrichtung (1) empfangen werden.

6. Tragbare Endgeräteeinrichtung (1), umfassend:
ein Kooperationsmittel (102), das konfiguriert ist, eine zweite Anwendung zum Organisieren von auf der tragbaren Endgeräteeinrichtung (1) gespeicherten Kontaktinformationen zu starten, wenn der Zugriff auf die Bildverarbeitungseinrichtung (2) von einer ersten Anwendung zum Zugreifen auf die Bildverarbeitungseinrichtung (2) ermöglicht wird, wobei die zweite Anwendung von der ersten Anwendung gestartet wird, wobei die Kontaktinformationen eine Vielzahl von Kontaktidentifikationsinformationen zum Identifizieren eines Kontakts und von Kontaktpunkten aufweisen, wobei die Kontaktpunkte mit den jeweiligen Kontaktidentifikationsinformationen verbunden sind;
ein Kontaktinformationserhaltungsmittel (103), das konfiguriert ist, die von der zweiten Anwendung organisierten Kontaktinformationen, wie von der ersten Anwendung angewiesen, nach dem Start der zweiten Anwendung automatisch zu erhalten; und
ein Übertragungsmittel (104), das konfiguriert ist, die Kontaktinformationen zu der Bildverarbeitungseinrichtung (2), wie von der ersten Anwendung angewiesen, automatisch zu übertragen, wobei die Kontaktinformationen von dem Kontaktinformationserhaltungsmittel (103) erhalten werden.

7. Tragbare Endgeräteeinrichtung (1) nach Anspruch 6, weiter umfassend:
ein Anzeigemittel (15), das konfiguriert ist, die Kontaktinformationen anzeigen; und
ein Beurteilungsmittel (11), das konfiguriert ist, zu beurteilen, ob eine Liste der Kontaktidentifikationsinformationen oder ein Kontaktpunkt, der mit einer bestimmten der Kontaktidentifikationsinformationen verbunden ist, auf dem Anzeigemittel (15) angezeigt wird, wobei das Kontaktinformationsermittlungsmittel (103) konfiguriert ist, alle Kontaktidentifikationsinformationen in der Liste zu erhalten, wenn das Beurteilungsmittel (11) beurteilt, dass die Liste der Kontaktidentifikationsinformationen auf dem Anzeigemittel (15) angezeigt wird oder die Kontaktinformationserhaltungsmittel (103) konfiguriert ist, einen Kontaktpunkt zu erhalten, der mit einer spezifizierten der Kontaktidentifikationsinformationen verbunden ist, wenn das Beurteilungsmittel (11) beurteilt, dass der Kontaktpunkt auf dem Anzeigemittel (15) angezeigt wird.

8. Tragbare Endgeräteeinrichtung (1) nach Anspruch 7, weiter umfassend ein Empfangsmittel (104), das eine Anfrage nach einem Kontaktpunkt empfängt, der mit einer spezifizierten der Kontaktidentifikationsinformationen verbunden ist, wobei die Anfrage von der Bildverarbeitungseinrichtung (2) gegeben wird, nachdem die Kontaktinformationserhaltungsmittel (103) die gesamten Kontaktidentifikationsinformationen erhält und das Übertragungsmittel (104) die gesamten Kontaktidentifikationsinformationen an die Bildverarbeitungseinrichtung (2) überträgt, wobei als Antwort auf die Anfrage, die von dem Empfangsmittel (104) empfangen wird, das Kontaktinformationserhaltungsmittel (103) den Kontaktpunkt von der zweiten Anwendung erhält und das Übertragungsmittel (104) den erhaltenen Kontaktpunkt an die Bildverarbeitungseinrichtung (2) überträgt.

9. Kontaktinformationsübertragungsprogramm für einen Computer (11) einer tragbaren Endgeräteeinrichtung (1) zum Ausführen von:
Starten, von einer ersten Anwendung, einer zweiten Anwendung zum Organisieren von auf der tragbaren Endgeräteeinrichtung (1) gespeicherten Kontaktinformationen, wenn der Zugriff auf eine Bildverarbeitungseinrichtung (2) von der ersten Anwendung zum Zugreifen auf die Bildverarbeitungseinrichtung (2) ermöglicht wird, wobei die Kontaktinformationen eine Vielzahl von Kontaktidentifikationsinformationen zum Identifizieren eines Kontakts und von Kontaktpunkten aufweisen, wobei die Kontaktpunkte mit den jeweiligen Kontaktidentifikationsinformationen verbunden sind;
Automatisches Erhalten der von der zweiten Anwendung organisierten Kontaktinformationen, wie von der ersten Anwendung angewiesen, nach dem Start der zweiten Anwendung; und
automatisches Übertragen der Kontaktinformationen an die Bildverarbeitungseinrichtung (2), wie von der ersten Anwendung angewiesen, wobei die Kontaktinformationen auch wie von der ersten Anwendung angewiesen erhalten werden.

10. Kontaktinformationsübertragungsprogramm für den Computer (11) der tragbaren Endgeräteeinrichtung (1) nach Anspruch 9, wobei die tragbare Endgeräteeinrichtung (1) weiter ein Anzeigemittel (15) umfasst, das die Kontaktinformationen anzeigt, wobei das Kontaktinformationsübertragungsprogramm ausführen soll:
Beurteilen, ob eine Liste der Kontaktidentifikationsinformationen oder ein Kontaktpunkt, der mit einer spezifizierten der Kontaktidentifikationsinformationen verbunden ist, auf dem Anzeigemittel (15) angezeigt wird; und
Erhalten aller Kontaktidentifikationsinformationen in der Liste, wenn beurteilt wird, dass die Liste der Kontaktidentifikationsinformationen auf dem Anzeigemittel (15) angezeigt wird, oder Erhalten eines Kontaktpunktes, der mit einer spezifizierten der Kontaktidentifikationsinformationen verbunden ist, wenn beurteilt wird dass der Kontaktpunkt auf dem Anzeigemittel (15) angezeigt wird.

11. Kontaktinformationsübertragungsprogramm für den Computer (11) der tragbaren Endgeräteeinrichtung (1) nach Anspruch 10, wobei das Kontaktinformationsübertragungsprogramm weiter ausführt:
Empfangen einer Anfrage nach einem Kontaktpunkt, der mit einer spezifizierten der Kontaktidentifikationsinformationen verbunden ist, wobei die Anfrage von der Bildverarbeitungseinrichtung (2) gegeben wird, nachdem alle Kontaktidentifikationsinformationen erhalten und an die Bildverarbeitungseinrichtung (2) übertragen werden; und
Erhalten des Kontaktpunkts von der zweiten Anwendung und Übertragen des erhaltenen Kontaktpunkts an die Bildverarbeitungseinrichtung (2) als Antwort auf die empfangene Anfrage.

## Revendications

1. Système de transfert d'informations de contact comprenant un appareil de traitement d'image (2) et un appareil terminal portable (1), l'appareil de traitement d'image (2) et l'appareil terminal portable (1) étant capables d'accéder l'un à l'autre, l'appareil terminal portable (1) comprenant :
un moyen de coopération (102) configuré pour lancer une seconde application pour organiser des informations de contact, stockées sur l'appareil terminal portable (1), lors de l'accès à l'appareil de traitement d'image (2) étant autorisé par une première application à accéder à l'appareil de traitement d'image (2), dans lequel la seconde application est lancée depuis la première application, les informations de contact incluant une pluralité d'informations d'identification de contact pour identifier un contact et des points de contact, les points de contact étant raccordés aux informations d'identification de contact respectives ;
un moyen d'obtention d'informations de contact (103) configuré pour obtenir automatiquement les informations de contact, organisées par la seconde application, comme requis par la première application, après le lancement de la seconde application ; et
un moyen de transfert (104) configuré pour transférer les informations de contact à l'appareil de traitement d'image (2) comme requis par la première application, les informations de contact étant obtenues par le moyen d'obtention d'informations de contact (103),
l'appareil de traitement d'image (2) comprenant :
un moyen de réception (202) configuré pour recevoir les informations de contact depuis l'appareil terminal portable (1) ;
un moyen d'affichage (260) ; et
un moyen de commande d'affichage (204) configuré pour afficher les informations de contact sur le moyen d'affichage (260) en convertissant les informations de contact en un format de données supporté sur le moyen d'affichage (260), les informations de contact étant reçues par le moyen de réception (202).

2. Système de transfert d'informations de contact selon la revendication 1, dans lequel :
l'appareil terminal portable (1) comprend en outre un moyen d'affichage (15) qui est configuré pour afficher les informations de contact et un moyen de jugement (11) qui juge du fait qu'une liste des informations d'identification de contact ou un point de contact raccordé à une information spécifiée des informations d'identification de contact est affiché(e) sur le moyen d'affichage (15) de l'appareil terminal portable (1) ;
l'appareil terminal portable (1) est configuré pour obtenir toutes les informations d'identification de contact dans la liste et les transfère à l'appareil de traitement d'image (2) si le moyen de jugement (11) juge que la liste des informations d'identification de contact est affichée sur le moyen d'affichage (15) de l'appareil terminal portable (1) ou l'appareil terminal portable (1) est configuré pour obtenir un point de contact raccordé à une information spécifiée des informations d'identification de contact et pour le transférer à l'appareil de traitement d'image (2) si le moyen de jugement (11) juge que le point de contact est affiché sur le moyen d'affichage (15) de l'appareil terminal portable (1) ; et
l'appareil de traitement d'image (2) est configuré pour afficher toutes les informations d'identification de contact ou le point de contact sur le moyen d'affichage (260) de l'appareil de traitement d'image (2), les informations d'identification de contact ou le point de contact étant obtenu(es) de celui-ci.

3. Système de transfert d'informations de contact selon la revendication 2, dans lequel :
l'appareil de traitement d'image (2) comprend en outre :
un moyen de sélection (205) qui est configuré pour préciser des informations d'identification de contact, le nom d'identification de contact étant sélectionné par un utilisateur parmi toutes les informations d'identification de contact affichées sur le moyen d'affichage (260) de l'appareil de traitement d'image (2) ; et
un moyen de demande (206) qui est configuré pour demander à l'appareil terminal portable (1) de fournir un point de contact raccordé au nom d'identification de contact, le nom d'identification de contact étant précisé par le moyen de sélection (205) ;
l'appareil terminal portable (1) est configuré pour obtenir le point de contact et le transfère à l'appareil de traitement d'image (2) comme requis par le moyen de demande (206) ; et
l'appareil de traitement d'image (2) est configuré pour afficher le point de contact sur le moyen d'affichage (260) de l'appareil de traitement d'image (2), le point de contact étant reçu depuis l'appareil terminal portable (1).

4. Système de transfert d'informations de contact selon la revendication 3, dans lequel :
l'appareil de traitement d'image (2) comprend en outre un moyen de stockage qui est configuré pour stocker toutes les informations d'identification de contact et le point de contact étant tous deux reçus depuis l'appareil terminal portable (1) ; et
le moyen de commande d'affichage (204) de l'appareil de traitement d'image (2) configuré pour faire changer son écran au moyen d'affichage (260) de l'appareil de traitement d'image (2) entre toutes les informations d'identification de contact et le point de contact en extrayant toutes les informations d'identification de contact et le point de contact du moyen de stockage.

5. Procédé de transfert d'informations de contact à mettre en oeuvre par un système de transfert d'informations de contact comprenant un appareil de traitement d'image (2) et un appareil terminal portable (1), l'appareil de traitement d'image (2) et l'appareil terminal portable (1) étant capables d'accéder l'un à l'autre, le procédé de transfert d'informations de contact comprenant les étapes de l'appareil terminal portable (1) :
le lancement, depuis une première application, d'une seconde application pour organiser des informations de contact, stockées sur l'appareil terminal portable, lors de l'accès à l'appareil de traitement d'image (2) étant autorisé par la première application à accéder à l'appareil de traitement d'image (2), les informations de contact incluant une pluralité d'informations d'identification de contact pour identifier un contact et des points de contact, les points de contact étant raccordés aux informations d'identification de contact respectives ;
l'obtention automatique des informations de contact, organisées par la seconde application, comme requis par la première application, après le lancement de la seconde application ; et
le transfert automatique des informations de contact à l'appareil de traitement d'image (2) comme requis par la première application, les informations de contact étant obtenues également comme requis par la première application, le procédé de transfert d'informations de contact comprenant en outre les étapes de l'appareil de traitement d'image (2) :
la réception des informations de contact depuis l'appareil terminal portable (1) ; et l'affichage des informations de contact sur le moyen d'affichage (260) en convertissant les informations de contact en un format de données supporté sur le moyen d'affichage (260), les informations de contact étant reçues depuis l'appareil terminal portable (1).

6. Appareil terminal portable (1) comprenant :
un moyen de coopération (102) configuré pour lancer une seconde application pour organiser des informations de contact, stockées sur l'appareil terminal portable (1), lors de l'accès à l'appareil de traitement d'image (2) étant autorisé par une première application à accéder à l'appareil de traitement d'image (2), dans lequel la seconde application est lancée depuis la première application, les informations de contact incluant une pluralité d'informations d'identification de contact pour identifier un contact et des points de contact, les points de contact étant raccordés aux informations d'identification de contact respectives ;
un moyen d'obtention d'informations de contact (103) configuré pour obtenir automatiquement les informations de contact, organisées par la seconde application, comme requis par la première application, après le lancement de la seconde application ; et
un moyen de transfert (104) configuré pour transférer automatiquement les informations de contact à l'appareil de traitement d'image (2) comme requis par la première application, les informations de contact étant obtenues par le moyen d'obtention d'informations de contact (103).

7. Appareil terminal portable (1) selon la revendication 6, comprenant en outre :
un moyen d'affichage (15) qui est configuré pour afficher les informations de contact ; et
un moyen de jugement (11) qui est configuré pour juger du fait qu'une liste des informations d'identification de contact ou un point de contact raccordé à une information spécifiée des informations d'identification de contact est affiché(e) sur le moyen d'affichage (15), dans lequel le moyen d'obtention d'informations de contact (103) est configuré pour obtenir toutes les informations d'identification de contact dans la liste si le moyen de jugement (11) juge que la liste des informations d'identification de contact est affichée sur le moyen d'affichage (15) ou le moyen d'obtention d'informations de contact (103) est configuré pour obtenir un point de contact raccordé à une information spécifiée des informations d'identification de contact si le moyen de jugement (11) juge que le point de contact est affiché sur le moyen d'affichage (15).

8. Appareil terminal portable (1) selon la revendication 7, comprenant en outre un moyen de réception (104) qui reçoit une demande pour un point de contact raccordé à une information spécifiée des informations d'identification de contact, la demande étant donnée par l'appareil de traitement d'image (2) après que le moyen d'obtention d'informations de contact (103) a obtenu toutes les informations d'identification de contact et le moyen de transfert (104) transfère toutes les information d'identification de contact à l'appareil de traitement d'image (2), dans lequel, en réponse à la demande étant reçue par le moyen de réception (104), le moyen d'obtention d'informations de contact (103) obtient le point de contact depuis la seconde application et le moyen de transfert (104) transfère le point de contact obtenu à l'appareil de traitement d'image (2).

9. Programme de transfert d'informations de contact pour un ordinateur (11) d'un appareil terminal portable (1) devant exécuter :
le lancement, depuis une première application, d'une seconde application pour organiser des informations de contact, stockées sur l'appareil terminal portable (1), lors de l'accès à un appareil de traitement d'image (2) étant autorisé par la première application à accéder à l'appareil de traitement d'image (2), les informations de contact incluant une pluralité d'informations d'identification de contact pour identifier un contact et des points de contact, les points de contact étant raccordés aux informations d'identification de contact respectives ;
l'obtention automatique des informations de contact, organisées par la seconde application, comme requis par la première application, après le lancement de la seconde application ; et
le transfert automatique des informations de contact à l'appareil de traitement d'image (2) comme requis par la première application, les informations de contact étant obtenues également comme requis par la première application.

10. Programme de transfert d'informations de contact pour l'ordinateur (11) de l'appareil terminal portable (1) selon la revendication 9, l'appareil terminal portable (1) comprenant en outre un moyen d'affichage (15) qui affiche les informations de contact, le programme de transfert d'informations de contact devant exécuter :
le jugement du fait qu'une liste des informations d'identification de contact ou un point de contact raccordé à une information spécifiée des informations d'identification de contact est affiché(e) sur le moyen d'affichage (15) ; et
l'obtention de toutes les informations d'identification de contact dans la liste s'il est jugé que la liste des informations d'identification de contact est affichée sur le moyen d'affichage (15) ou l'obtention d'un point de contact raccordé à une information spécifiée des informations d'identification de contact s'il est jugé que le point de contact est affiché sur le moyen d'affichage (15).

11. Programme de transfert d'informations de contact pour l'ordinateur (11) de l'appareil terminal portable (1) selon la revendication 10, le programme de transfert d'informations de contact devant en outre exécuter :
la réception d'une demande pour un point de contact raccordé à une information spécifiée des informations d'identification de contact, la demande étant donnée par l'appareil de traitement d'image (2) après que toutes les informations d'identification de contact sont obtenues et transférées à l'appareil de traitement d'image (2) ; et
l'obtention du point de contact depuis la seconde application et le transfert du point de contact obtenu à l'appareil de traitement d'image (2), en réponse à la demande étant reçue.
